# EUROPEAN PATENT APPLICATION

(11) **EP 3 713 156 A1**
(43) Date of publication of application: **23.09.2020**
(21) Application number: 20164072.9
(22) Date of filing: 19.03.2020
(51) Int. Cl.: H04L 12/26

(54) **NETWORK PERFORMANCE DETECTION METHOD AND RELATED APPARATUS**

(30) Priority: 19.03.2019 CN 201910208350
(71) Applicant: Huawei Technologies Co. Ltd., Guangdong 518129 (CN)
(72) Inventor: SONG, Wei, Shenzhen, Guangdong 518129 (CN); ZHANG, Zhenwei, Shenzhen, Guangdong 518129 (CN)
(74) Representative: Thun, Clemens

(57) **Abstract**

This application provides a network performance detection method and a related apparatus. A first device may collect, based on identification information of a received data packet, statistics on data packets having same identification information, to obtain packet block information corresponding to the identification information; and send the packet block information to a second device when statistics collection of the packet block information corresponding to the identification information is completed, to determine packet block quality information corresponding to the identification information. The identification information includes a flow identifier and a block identifier. The flow identifier includes a source Internet Protocol IP address, a source port, a destination Internet Protocol IP address, and a destination port of the data packet. The block identifier is a higher N-bit value of an IPID field in the data packet. This application helps simplify network performance detection.

## Description

### TECHNICAL FIELD

This application relates to the field of computer technologies, and in particular, to a network performance detection method and a related apparatus.

### BACKGROUND

As network services have larger impact on people's life, some network services have a higher requirement for network performance. For example, network services such as voice and video services are comparatively sensitive to a packet loss ratio and latency in network performance, but a download service is less sensitive to the latency and packet loss ratio. Therefore, how to detect network performance in a timely manner is a comparatively important issue.

Currently, in a network performance detection method, a service packet needs to be marked. For example, a first terminal makes some modifications to a packet on which statistics need to be collected, and a second terminal identifies these modifications, and then performs statistical analysis on the received packet. It can be learned that packet modifications are further required in the detection method, and consequently network performance detection is comparatively complex.

### SUMMARY

This application provides a network performance detection method and a related apparatus, to help simplify network performance detection.

According to a first aspect, this application provides a network performance detection method. In the network performance detection method, a first device may collect, based on identification information of a received data packet, statistics on data packets having same identification information, to obtain packet block information corresponding to the identification information; and send the packet block information to a second device when statistics collection of the packet block information corresponding to the identification information is completed, to determine packet block quality information corresponding to the identification information. In particular, the identification information includes a flow identifier and a block identifier, and the flow identifier includes a source Internet Protocol IP address, a source port, a destination Internet Protocol IP address, and a destination port of the data packet; and the block identifier is a higher N-bit value of an IPID field in the data packet, where N is a positive integer less than a total bit quantity of the IPID field. For example, when N is equal to 8, statistics collection and reporting can be performed for a packet block of a maximum of 256 packets, and packet block quality information can be obtained without a need to modify a data packet. This helps simplify network performance detection.

In addition, in this application, statistics on the data packets are collected based on the block identifier, namely, the higher N-bit value of the IPID field in the data packet, so that statistics collection and reporting can be performed for a packet block of a maximum fixed quantity of packets without a need to determine a statistical interval for reporting a packet based on a synchronization status of a sliding window. Further, this helps simplify network performance detection.

In this application, the packet block information may include start time, end time, a total packet quantity, and a total byte quantity; the start time is receiving time at which the first device receives a first data packet having the identification information; the end time is receiving time at which the first device receives a last data packet having the identification information; the total packet quantity is a total quantity of data packets having the identification information that are received by the first device; and the total byte quantity is a total quantity of bytes of the data packets having the identification information that are received by the first device. Therefore, this helps determine the packet block quality information based on the packet block information.

In an optional implementation, that the first device collects, based on the data packets having the same identification information, statistics on the packet block information corresponding to the identification information may include: updating, by the first device, the packet block information corresponding to the identification information when the identification information of the data packet already exists; or creating, by the first device, the packet block information corresponding to the identification information when the identification information of the data packet does not exist. For example, when the first device receives one data packet, if identification information carried in the data packet already exists in a packet block information table obtained through statistics collection, a total packet quantity corresponding to the identification information in the packet block information table increments by 1. Correspondingly, a quantity of bytes of the data packet is added to a total byte quantity corresponding to the identification information, to obtain updated packet block information corresponding to the identification information. For another example, when the first device receives one data packet, if identification information carried in the data packet does not exist in a packet block information table obtained through statistics collection, the identification information may be added to the packet block information table, a total packet quantity corresponding to the identification information is recorded as 1, a total byte quantity is a quantity of bytes of the data packet, and start time corresponding to the identification information is receiving time of the data packet, or the like. It can be learned that packet block information corresponding to each piece of identification information can be obtained by using the foregoing statistical method, to help determine packet block quality information based on packet block information that corresponds to identification information and that is reported by each first device, and further help obtain a status of network performance.

In an optional implementation, the creating, by the first device, the packet block information corresponding to the identification information when the identification information of the data packet does not exist includes: when the flow identifier of the data packet does not exist, creating, by the first device, the packet block information corresponding to the identification information, where the start time in the packet block information is receiving time of the data packet; or when the flow identifier of the data packet exists, but the block identifier does not exist, creating, by the first device, the packet block information corresponding to the identification information, where the start time in the packet block information is receiving time of the data packet. In other words, the identification information includes the flow identifier and the block identifier, and data packets having a same flow identifier may have different block identifiers. Therefore, for a same flow identifier, the obtained packet block information table includes packet block information corresponding to a plurality of block identifiers. To be specific, for data packets having a same flow identifier, packet block information is determined in a statistical unit of a maximum of 256 data packets corresponding to a block identifier, to avoid complexity of determining a statistical interval based on a sliding window.

In an optional implementation, that a first device sends the packet block information to a second device when statistics collection of the packet block information corresponding to the identification information is completed includes: when receiving a next data packet and determining that identification information of the next data packet does not exist, determining, by the first device, that the statistics collection of the packet block information corresponding to the identification information is completed; and sending, by the first device, the packet block information to the second device. In other words, when first identification information of a received first data packet already exists, packet block information corresponding to the first identification information is updated; when second identification information of a received second data packet does not exist, it indicates that statistics collection of data packets having the first identification information is completed, and the packet block information corresponding to the first identification information may be reported.

According to a second aspect, this application further provides a network performance detection method. A difference between the network performance detection method and the network performance detection method in the foregoing aspect lies in that the network performance detection method in this aspect is described by using a second device as an execution body. For example, the second device may be an analysis device. Correspondingly, a first device may be a reporting device, for example, each access switch. For example, the analysis device can receive packet block information that corresponds to each piece of identification information and that is reported by each reporting device, to determine packet block quality information corresponding to each piece of identification information.

In the network performance detection method, after receiving the packet block information that corresponds to each piece of identification information and that is reported by each first device, the second device searches for a plurality of pieces of packet block information having same identification information, and determines, based on the plurality of pieces of packet block information having the same identification information, the packet block quality information corresponding to each piece of identification information, where the packet block quality information may include a packet loss ratio, a bit loss ratio, a latency, and the like. The identification information includes a flow identifier and a block identifier, and the flow identifier includes a source Internet Protocol IP address, a source port, a destination Internet Protocol IP address, and a destination port of a data packet; and the block identifier is a higher N-bit value of an IPID field in the data packet, where N is a positive integer less than a total bit quantity of the IPID field. Therefore, the packet block quality information corresponding to each piece of identification information may be determined based on the packet block information corresponding to each piece of identification information, to help obtain a status of network performance based on the packet block quality information corresponding to each piece of identification information. In this application, the status of network performance can be obtained even when no information in a data packet is modified, so that network performance detection can be effectively simplified. For example, N may be equal to 8, and the total bit quantity of the IPID is 16. In this application, the packet block quality information can be determined for a maximum of 256 packet. This helps avoid determining a statistical interval based on a sliding window, and further simplify statistics collection. Correspondingly, the packet block information includes start time, end time, a total packet quantity, and a total byte quantity; the start time is receiving time at which each first device receives a first data packet having the identification information; the end time is receiving time at which each first device receives a last data packet having the identification information; the total packet quantity is a total quantity of data packets having the identification information that are received by each first device; and the total byte quantity is a total quantity of bytes of the data packets having the identification information that are received by each first device. It can be learned that the packet block information helps obtain packet block quality information corresponding to each piece of identification information.

In an optional implementation, that the second device determines, based on the plurality of pieces of packet block information having the same identification information, the packet block quality information corresponding to each piece of identification information may include: for the plurality of pieces of packet block information having the same identification information, calculating, by the second device based on a difference between total packet quantities in the plurality of pieces of packet block information, a packet loss ratio between a plurality of first devices that report the plurality of pieces of packet block information; calculating a bit loss ratio between the plurality of first devices based on a difference between total byte quantities in the plurality of pieces of packet block information; and calculating a latency between the plurality of first devices based on a difference between start time or a difference between end time in the plurality of pieces of packet block information.

According to a third aspect, this application further provides a network performance detection apparatus. The network performance detection apparatus has functions of implementing the first device in the foregoing method embodiment. The functions may be implemented by hardware, or may be implemented by hardware executing corresponding software. The hardware or the software includes one or more modules corresponding to the foregoing functions.

In a possible design, the network performance detection apparatus is applied to the first device, for example, an access switch, and may include a processor and a memory. For example, the network performance detection apparatus is applied to the first device, and the processor is configured to support the first device in performing corresponding functions in the foregoing method. The memory is configured to be coupled to the processor and store a program instruction and data that are necessary for the network performance detection apparatus.

In another possible design, the network performance detection apparatus is applied to the first device and may include a determining module, a statistics collection module, a reporting module, and the like, for example, is applied to the first device and configured to perform corresponding functions of the first device in the foregoing method. For example, the determining module determines identification information of a received data packet, where the identification information includes a flow identifier and a block identifier, and the flow identifier includes a source Internet Protocol IP address, a source port, a destination Internet Protocol IP address, and a destination port of the data packet; and the block identifier is a higher N-bit value of an IPID field in the data packet, where N is a positive integer less than a total bit quantity of the IPID field. The statistics collection module collects, based on data packets having same identification information, statistics on packet block information corresponding to the identification information. The reporting module sends the packet block information to a second device when statistics collection of the packet block information corresponding to the identification information is completed, where the packet block information is used to determine packet block quality information corresponding to the identification information.

According to a fourth aspect, an embodiment of this application further provides a network performance detection apparatus. The network performance detection apparatus is applied to a second device. For example, the network performance detection apparatus has functions of implementing the second device in the foregoing method embodiment. The functions may be implemented by hardware, or may be implemented by hardware executing corresponding software. The hardware or the software includes one or more modules corresponding to the foregoing functions.

In a possible design, the network performance detection apparatus is applied to the second device and may include a processor and a memory. The processor is configured to support the second device in performing corresponding functions in the foregoing method. The memory is configured to be coupled to the processor and store a program instruction and data that are necessary for the network performance detection apparatus. In another possible design, the network performance detection apparatus is applied to the second device and may include a receiving module, a search module, a determining module, and the like, for example, is applied to the second device and configured to perform corresponding functions of the second device in the foregoing method. For example, the receiving module receives packet block information that corresponds to each piece of identification information and that is reported by each first device, where the identification information includes a flow identifier and a block identifier, and the flow identifier includes a source Internet Protocol IP address, a source port, a destination Internet Protocol IP address, and a destination port of a data packet; and the block identifier is a higher N-bit value of an IPID field in the data packet, where N is a positive integer less than a total bit quantity of the IPID field. The search module searches the packet block information corresponding to each piece of identification information for a plurality of pieces of packet block information having same identification information. The determining module determines, based on the plurality of packet block information having the same identification information, packet block quality information corresponding to each piece of identification information, where the packet block quality information includes a packet loss ratio, a bit loss ratio, and a latency.

According to a fifth aspect, an embodiment of this application provides a network performance detection system. The network performance detection system includes the network performance detection apparatus corresponding to at least two first devices and the network performance detection apparatus corresponding to at least one second device in the foregoing aspects. For example, the system may include two access switches and at least one analysis device.

According to a sixth aspect, this application further provides a network performance detection method. The method includes any network performance detection method according to the first aspect and any network performance detection method according to the second aspect.

According to a seventh aspect, this application further provides a computer-readable storage medium. The computer-readable storage medium stores a computer program used by the foregoing first device or second device. The computer program includes at least one segment of code. The at least one segment of code may be executed by a computer, to control the computer to perform the program designed for the first aspect or the second aspect.

According to an eighth aspect, an embodiment of this application further provides a chip system. The chip system includes a processor, for example, is applied to a first device or a second device, and used by the first device or the second device to implement functions in the foregoing aspects, for example, to generate or process the data packet, the packet block information, and/or the packet block quality information in the foregoing methods. In a possible design, the chip system further includes a memory. The memory is configured to store a program instruction and data that are necessary for implementing functions of the first device or the second device. The chip system may include a chip, or may include a chip and another discrete device.

### BRIEF DESCRIPTION OF DRAWINGS

FIG. 1 is a schematic diagram of a network structure according to an embodiment of this application;
FIG. 2 is a schematic diagram of a network performance detection method according to an embodiment of this application;
FIG. 3 is a schematic structural diagram of a network performance detection apparatus according to an embodiment of this application;
FIG. 4 is a schematic structural diagram of another network performance detection apparatus according to an embodiment of this application; and
FIG. 5 is a schematic structural diagram of a network device according to an embodiment of this application.

### DESCRIPTION OF EMBODIMENTS

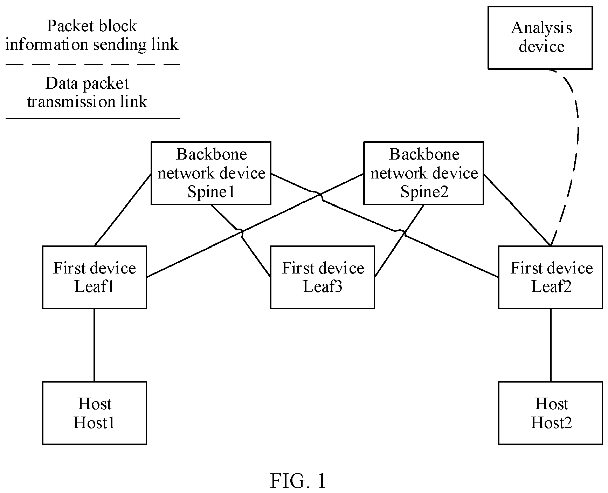

Terms used in embodiments of this application are merely used to explain specific embodiments of the present invention, but are not intended to limit the present invention. To simplify network performance detection, the embodiments of this application provides a network performance detection method based on a network structure shown in FIG. 1. In the network performance detection method, statistics on a data packet can be collected based on identification information including a flow identifier and a block identifier, to obtain packet block information. This helps obtain packet block quality information based on the packet block information, and further obtain a status of network performance. It can be learned that, in the network performance detection method, statistics collection can be completed without a need to modify a data packet, so that detection can be simplified. Further, the block identifier is a higher N-bit value of an IPID field in the data packet, where N is a positive integer less than a total bit quantity of the IPID field. For example, N is equal to 8, and the total bit quantity of the IPID is 16, so that statistics on each piece of packet block information can be collected for a maximum of 256 data packets, to avoid complexity caused by determining a statistical interval based on a sliding window.

The network structure shown in FIG. 1 may include at least two first devices and at least one second device. The first device may be an access switch or the like, and can obtain a data packet of each terminal. The second device may be an analysis device or a central device, and is configured to determine packet block quality information for packet block information reported by each first device, to determine network performance. Optionally, the network structure shown in FIG. 1 may further include another network device, such as a backbone network switch, configured to complete transmission of a data packet between terminal devices. As shown in FIG. 1, for example, the network structure includes three first devices, namely, a first device Leaf1, a first device Leaf2, and a first device Leaf3, one second device, namely, an analysis device, and two backbone network devices, namely, a backbone network device Spine1 and a backbone network device Spine2, where Leaf1 is connected to a host Host1, and Leaf2 is connected to a host Host2.

In the embodiments of this application, a data packet is a data unit exchanged and transmitted over a network, and may also be referred to as a data block. The data packet may include a User Datagram Protocol (UDP) packet or a Transmission Control Protocol (TCP) packet. An IPID (IP identification) is a field in the data packet and has a length of 16 bits. The field is an identity of the data packet. IPID fields in data packets sent by a same host are in ascending order, to help an access switch collect statistics on the data packets.

In the embodiments of this application, the identification information includes the flow identifier and the block identifier. The flow identifier includes a source Internet Protocol (IP) address, a source port, a destination IP address, and a destination port of the data packet. The block identifier is a higher N-bit value of the IPID field in the data packet, where N is a positive integer less than a total bit quantity of the IPID field. Data packets having a same flow identifier may have different block identifiers. Therefore, statistics on the data packets are collected based on the identification information. For example, when N is equal to 8, and the total bit quantity of the IPID is 16, one piece of packet block information may be determined for a maximum of 256 packets. In other words, Block id = IPID % 256, where % is modulo operator. For example, the block identifier Block ID corresponding to the IPID includes: Block 0, Block 1, Block 2, ..., or Block 255, where Block 0 corresponds to data packets whose IPIDs is 0x0000 to 0x00ff, Block 1 corresponds to data packets whose IPIDs is 0x0100 to 0x01ff, ..., and Block 255 corresponds to data packets whose IPIDs is 0xff00 to 0xffff.

The packet block information includes start time, end time, a total packet quantity, and a total byte quantity. The start time is receiving time at which the first device receives a first data packet having the identification information. The end time is receiving time at which the first device receives a last data packet having the identification information. The total packet quantity is a total quantity of data packets having the identification information that are received by the first device. The total byte quantity is a total quantity of bytes of the data packets having the identification information that are received by the first device. Correspondingly, the packet block quality information includes a packet loss ratio, a bit loss ratio, a latency, and the like.

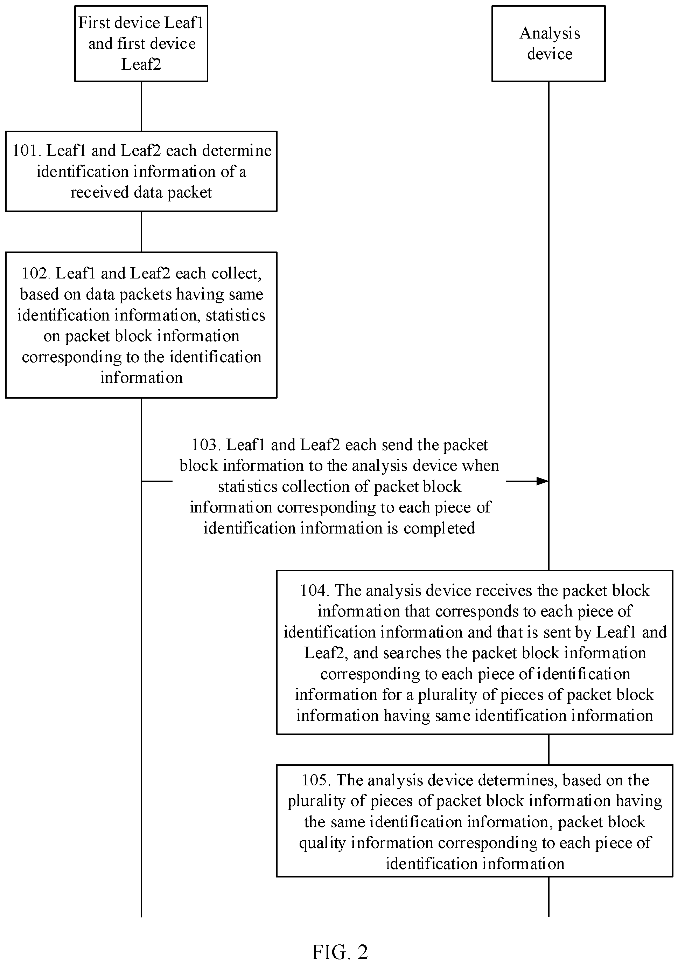

Based on the network structure shown in FIG. 1, the network performance detection method described in the embodiments of this application is described from the perspective of interaction between Leaf1, Leaf2, and the analysis device. FIG. 2 is a schematic flowchart of a network performance detection method according to an embodiment of this application. As shown in FIG. 2, the network performance detection method may include the following steps:
101. Leaf1 and Leaf2 each determine identification information of a received data packet.
102. Leaf1 and Leaf2 each collect, based on data packets having same identification information, statistics on packet block information corresponding to the identification information.
103. Leaf1 and Leaf2 each send the packet block information to an analysis device when statistics collection of packet block information corresponding to each piece of identification information is completed.
   The packet block information is used to determine packet block quality information corresponding to the identification information.
104. The analysis device receives the packet block information that corresponds to each piece of identification information and that is sent by Leaf1 and Leaf2, and searches the packet block information corresponding to each piece of identification information for a plurality of pieces of packet block information having same identification information.
105. The analysis device determines, based on the plurality of pieces of packet block information having the same identification information, packet block quality information corresponding to each piece of identification information.

The packet block quality information includes a packet loss ratio, a bit loss ratio, a latency, and the like.

Leaf1 is used as an example. As shown in Table 1, the packet block information includes a reporting node, a flow identifier Flow id, a block identifier Block id, start time Start, end time End, a total packet quantity Packets, and a total byte quantity. The reporting node is a device that sends the packet block information to the analysis device, that is, is each first device.

In an optional implementation, that Leaf1 and Leaf2 each collect, based on data packets having same identification information, statistics on packet block information corresponding to the identification information may include: updating, by Leaf1 and Leaf2 each, the packet block information corresponding to the identification information when the identification information of the data packet already exists; or creating, by Leaf1 and Leaf2 each, the packet block information corresponding to the identification information when the identification information of the data packet does not exist.

For example, in Table 1, if identification information of a data packet received by Leaf1 is (Flow_1, Block 0), Leaf1 updates End to receiving time, such as 09:14:01, of the data packet, updates Packets from 10 to 11, and updates Bytes from 10k to 11k based on a size of the data packet, that is, 1k.

In an optional implementation, the creating, by Leaf1 and Leaf2 each, the packet block information corresponding to the identification information when the identification information of the data packet does not exist includes: when the flow identifier of the data packet does not exist, creating, by Leaf1 and Leaf2 each, the packet block information corresponding to the identification information, where the start time in the packet block information is receiving time of the data packet; or when the flow identifier of the data packet exists, but the block identifier does not exist, creating, by Leaf1 and Leaf2 each, the packet block information corresponding to the identification information, where the start time in the packet block information is receiving time of the data packet. For example, when identification information of a data packet received by Leaf1 is (Flow_1, Block_1), but there is no packet block information corresponding to the identification information in Table 1, the packet block information corresponding to the identification information shown in Table 1 may be created, including: Start: 09:14:01; End: 09:14:01; Packets: 1; Bytes: 2k.

**Table 1**

| Reporting node | Flow_id | Block_id | Start | End | Packets | Bytes |
|---|---|---|---|---|---|---|
| Leaf1 | Flow_1 | Block_0 | 09:14:00 | 09:14:01 | 10 | 10k |
| Leaf1 | Flow_1 | Block_1 | 09:14:01 | 09:14:01 | 1 | 2k |
| ... | ... | ... | ... | ... | ... | ... |

In an optional implementation, that Leaf1 and Leaf2 each send the packet block information to the analysis device when statistics collection of the packet block information corresponding to the identification information is completed includes: when receiving a next data packet and determining that identification information of the next data packet does not exist, determining, by Leaf1 and Leaf2 each, that the statistics collection of the packet block information corresponding to the identification information is completed; and sending, by Leaf1 and Leaf2 each, the packet block information to the second device. For example, in Table 1, when receiving a data packet whose identification information is (Flow_1, Block_1), Leaf1 may report packet block information corresponding to (Flow_1, Block 0) to the analysis device.

In an optional implementation, that the analysis device determines, based on the plurality of pieces of packet block information having the same identification information, packet block quality information corresponding to each piece of identification information may include: for the plurality of pieces of packet block information having the same identification information, calculating, by the analysis device based on a difference between total packet quantities in the plurality of pieces of packet block information, a packet loss ratio between Leaf1 and Leaf2 that report the plurality of pieces of packet block information; calculating a bit loss ratio between Leaf1 and Leaf2 based on a difference between total byte quantities in the plurality of pieces of packet block information; and calculating a latency between Leaf1 and Leaf2 based on a difference between start time or a difference between end time in the plurality of pieces of packet block information.

For example, the packet block information that corresponds to the same identification information and that is reported by Leaf1 and Leaf2 is shown in Table 2 and Table 3, respectively, and the analysis device calculates the packet loss ratio Loss Packets being 1/99 according to a difference between total packet quantities in Table 2 and Table 3: 99 - 98 = 1; calculates the bit loss ratio Loss Bytes being 1/99 according to a difference between total byte quantities in Table 2 and Table 3: 99k - 98k = 1k; and calculates the latency between Leaf1 and Leaf2 being 1s according to start time, namely, 09:14:00, of a data packet having the identification information and start time, namely, 09:14:01, at which the data packet received by Leaf1 at the start time arrives at Leaf2. Optionally, the analysis device may output a result shown in Table 4 for the packet block quality information corresponding to each piece of identification information, so that an analyst determines network performance based on the packet block quality information corresponding to each piece of identification information.

**Table 2**

| Reporting node | Flow_id | Block_id | Start | End | Packets | Bytes |
|---|---|---|---|---|---|---|
| Leaf1 | Flow_1 | Block_0 | 09:14:00 | 09:14:03 | 99 | 99k |

**Table 3**

| Reporting node | Flow_id | Block_id | Start | End | Packets | Bytes |
|---|---|---|---|---|---|---|
| Leaf2 | Flow_1 | Block_0 | 09:14:01 | 09:14:04 | 98 | 98k |

**Table 4**

| Flow_id | Block_id | Start | End | Loss Packets | Loss Bytes | Latency |
|---|---|---|---|---|---|---|
| Flow_1 | Block_0 | 09:14:01 | 09:14:04 | 1/99 | 1/99 | 1s |

It can be learned that in the network performance detection method in this embodiment of this application, statistics on packet block information are collected based on identification information, to calculate packet block quality information, so that statistics collection and reporting can be performed for a packet block of a maximum of 256 packets, and the packet block quality information can be obtained without a need to modify a data packet. This helps simplify network performance detection.

The foregoing parameters included in the packet block information obtained through statistics collection are an example. Alternatively, another parameter may be included in this embodiment of this application. This is not limited. Correspondingly, the obtained packet block quality information may include but is not limited to the foregoing quality parameters. In addition, in this embodiment of this application, only a higher N-bit value of an IPID is used as a block identifier, and statistics on packet block information are collected based on a bit quantity obtained by subtracting N bits from a total bit quantity of the IPID. For example, in this embodiment of this application, the IPID includes 16 bits in total, and N is equal to 8, so that the statistics on the packet block information are collected for a maximum of 256 data packets. A size of a statistical unit for packet block information is not limited in this embodiment of this application.

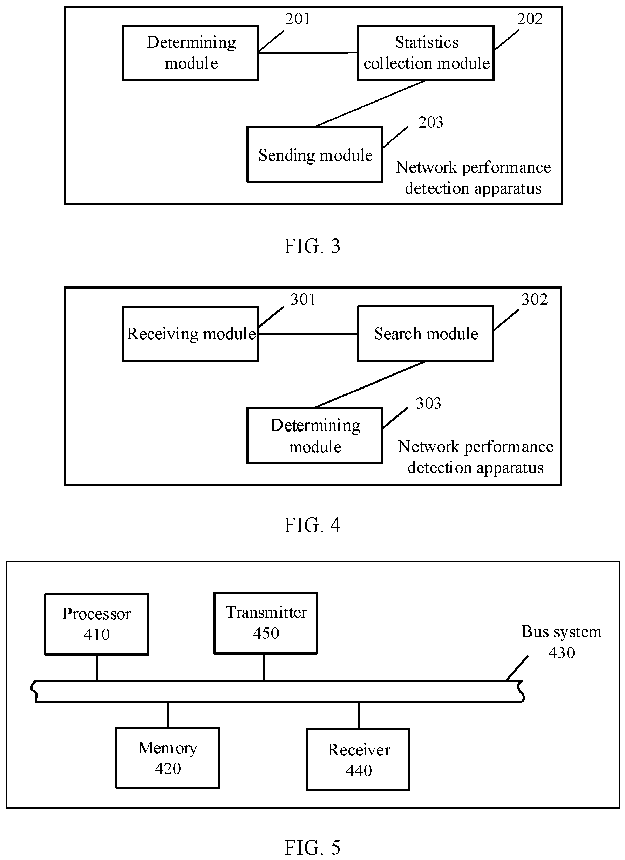

FIG. 3 shows a network performance detection apparatus provided in an embodiment of this application. The network performance detection apparatus may be applied to a first device. Optionally, the network performance detection apparatus may include:
a determining module 201, configured to determine identification information of a received data packet, where the identification information includes a flow identifier and a block identifier, and the flow identifier includes a source Internet Protocol IP address, a source port, a destination Internet Protocol IP address, and a destination port of the data packet; and the block identifier is a higher N-bit value of an IPID field in the data packet, where N is a positive integer less than a total bit quantity of the IPID field;
a statistics collection module 202, configured to collect, based on data packets having same identification information, statistics on packet block information corresponding to the identification information; and a sending module 203, configured to send the packet block information to a second device when statistics collection of the packet block information corresponding to the identification information is completed, where the packet block information is used to determine packet block quality information corresponding to the identification information.

In this embodiment of this application, the packet block information includes start time, end time, a total packet quantity, and a total byte quantity. The start time is receiving time at which the first device receives a first data packet having the identification information. The end time is receiving time at which the first device receives a last data packet having the identification information. The total packet quantity is a total quantity of data packets having the identification information that are received by the first device. The total byte quantity is a total quantity of bytes of the data packets having the identification information that are received by the first device.

In an optional implementation, that a statistics collection module 202 collects, based on data packets having same identification information, statistics on packet block information corresponding to the identification information is specifically: updates the packet block information corresponding to the identification information when the identification information of the data packet already exists; or creating the packet block information corresponding to the identification information when the identification information of the data packet does not exist.

In an optional implementation, the creating, by the statistics collection module 202, the packet block information corresponding to the identification information when the identification information of the data packet does not exist is specifically: when the flow identifier of the data packet does not exist, creating the packet block information corresponding to the identification information, where the start time in the packet block information is receiving time of the data packet; or when the flow identifier of the data packet exists, but the block identifier does not exist, creating the packet block information corresponding to the identification information, where the start time in the packet block information is receiving time of the data packet.

In an optional implementation, that a sending module 203 sends the packet block information to a second device when statistics collection of the packet block information corresponding to the identification information is completed is specifically: when a next data packet is received, and it is determined that identification information of the next data packet does not exist, determining that the statistics collection of the packet block information corresponding to the identification information is completed; and sending the packet block information to the second device.

Optionally, the network performance detection apparatus shown in FIG. 3 may perform the related implementation of the first device, and details are not described herein again.

FIG. 4 is a schematic structural diagram of another network performance detection apparatus according to an embodiment of this application. The network performance detection apparatus may be applied to a second device. As shown in FIG. 4, the network performance detection apparatus may include:
a receiving module 301, configured to receive packet block information that corresponds to each piece of identification information and that is reported by each first device, where the identification information includes a flow identifier and a block identifier, and the flow identifier includes a source Internet Protocol IP address, a source port, a destination Internet Protocol IP address, and a destination port of a data packet; and the block identifier is a higher N-bit value of an IPID field in the data packet, where N is a positive integer less than a total bit quantity of the IPID field;
a search module 302, configured to search the packet block information corresponding to each piece of identification information for a plurality of pieces of packet block information having same identification information; and
a determining module 303, configured to determine, based on the plurality of pieces of packet block information having the same identification information, packet block quality information corresponding to each piece of identification information, where the packet block quality information includes a packet loss ratio, a bit loss ratio, and a latency.

Similarly, the packet block information includes start time, end time, a total packet quantity, and a total byte quantity. The start time is receiving time at which each first device receives a first data packet having the identification information. The end time is receiving time at which each first device receives a last data packet having the identification information. The total packet quantity is a total quantity of data packets having the identification information that are received by each first device. The total byte quantity is a total quantity of bytes of the data packets having the identification information that are received by each first device.

In an optional implementation, that a determining module 303 determines, based on the plurality of pieces of packet block information having the same identification information, packet block quality information corresponding to each piece of identification information is specifically: for the plurality of pieces of packet block information having the same identification information, calculating, based on a difference between total packet quantities in the plurality of pieces of packet block information, a packet loss ratio between a plurality of first devices that report the plurality of pieces of packet block information; calculating a bit loss ratio between the plurality of first devices based on a difference between total byte quantities in the plurality of pieces of packet block information; and calculate a latency between the plurality of first devices based on a difference between start time or a difference between end time in the plurality of pieces of packet block information.

Optionally, the network performance detection apparatus shown in FIG. 4 may further perform another optional implementation of the second device or analysis device, and details are not described herein again.

FIG. 5 is a schematic structural diagram of a network device according to an embodiment of this application. The network device may perform related operations of the apparatus shown in FIG. 3 and/or FIG. 4, that is, perform related operations of the first device or the second device in the foregoing method embodiments, and may also have related functions of the first device or the second device. Alternatively, the device may be a chip or a circuit, for example, a chip or a circuit that may be disposed in the first device or the second device. The device may include a processor 410 and a memory 420. The memory 420 is configured to store an instruction. The processor 410 is configured to execute the instruction stored in the memory 420, so that the device implements the related operations of the first device or second device, for example, related operations of Leaf1 or the analysis device.

The device may further include a receiver 440 and a transmitter 450. Further, the device may include a bus system 430.

The processor 410, the memory 420, the receiver 440, and the transmitter 450 are connected to each other by using the bus system 430. The processor 410 is configured to execute the instruction stored in the memory 420, to control the receiver 440 to receive a signal and control the transmitter 450 to send a signal, to complete steps of the device in the foregoing method. The receiver 440 and the transmitter 450 may be a same physical entity or different physical entities. When being the same physical entity, the receiver 440 and the transmitter 450 may be collectively referred to as a transceiver. The memory 420 may be integrated into the processor 410, or may be separated from the processor 410.

In an implementation, it may be considered that functions of the receiver 440 and the transmitter 450 are implemented by using a transceiver circuit or a dedicated transceiver chip. It may be considered that the processor 410 is implemented by using a dedicated processing chip, processing circuit, or processor, or a general-purpose chip.

In another implementation, it may be considered that the operations of the first device or the second device provided in the embodiments of this application are implemented by using a general-purpose computer. To be specific, program code that implements functions of the processor 410, the receiver 440, and the transmitter 450 is stored in the memory 420, and a general-purpose processor executes the code in the memory 420, to implement the functions of the processor 410, the receiver 440, and the transmitter 450. For example, the processor 410 may invoke the program code in the memory 420, or perform, based on the receiver 440 and the transmitter 450, related operations of the sending module in FIG. 3 or the receiving module in FIG. 4, or related operations or implementations performed by the first device or the second device in the foregoing method embodiment.

For concepts, explanations, detailed descriptions, and other steps related to the technical solutions provided in this embodiment of this application and related to the network device, refer to related descriptions in the foregoing method or another embodiment. Details are not described herein again.

It should be understood that in this embodiment of this application, the processor 410 may be a central processing unit (CPU), or the processor 410 may be another general purpose processor, a digital signal processor (DSP), an application-specific integrated circuit (ASIC), a field-programmable gate array (FPGA), or another programmable logic device, discrete gate or transistor logic device, discrete hardware component, or the like. The general purpose processor may be a microprocessor, or the processor may be any conventional processor or the like.

The memory 420 may include a read-only memory and a random access memory, and provide an instruction and data for the processor 410. A part of the memory 420 may further include a non-volatile random access memory.

The bus system 430 may further include a power bus, a control bus, a status signal bus, and the like, in addition to a data bus. However, for clear description, various types of buses in the figure are marked as the bus system 430.

In addition, an embodiment of this application further provides a network performance detection system. The network performance detection system may include the at least two first devices and the at least one second device. The first device can perform related operations in the foregoing method embodiment, and the second device can perform related operations in the foregoing method embodiment, to obtain packet block information and packet block quality information, and determine network performance. In addition, this application further provides a computer-readable storage medium. The computer-readable storage medium stores a computer instruction. When the computer instruction runs on a computer, the computer is enabled to perform corresponding operations and/or procedures performed by the first device in the network performance detection method in the embodiments of this application, or the computer is enabled to perform corresponding operations and/or procedures performed by the second device in the network performance detection method in the embodiments of this application. This application further provides a computer program product. The computer program product includes computer program code. When the computer program code runs on a computer, the computer is enabled to perform corresponding operations and/or procedures performed by the first device in the network performance detection method in the embodiments of this application; or the computer is enabled to perform corresponding operations and/or procedures performed by the second device in the network performance detection method in the embodiments of this application.

This application further provides a chip, including a processor. The processor is configured to invoke and run a computer program stored in a memory, to perform corresponding operations and/or procedures performed by the first device in the network performance detection method in the embodiments of this application, or perform corresponding operations and/or procedures performed by the second device in the network performance detection method in the embodiments of this application. Optionally, the chip further includes the memory. The memory is connected to the processor by using a circuit or a wire. The processor is configured to read and execute the computer program in the memory. Optionally, the chip further includes a communications interface, and the processor is connected to the communications interface. The communications interface is configured to receive data and/or information that need/needs to be processed. The processor obtains the data and/or information from the communications interface, and processes the data and/or information. The communications interface may be an input/output interface.

In an implementation process, steps in the foregoing methods can be implemented by using a hardware integrated logic circuit in the processor, or by using instructions in a form of software. The steps in the methods disclosed with reference to the embodiments of this application may be directly performed by a hardware processor, or may be performed by using a combination of hardware in the processor and a software module. The software module may be located in a storage medium mature in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should further be understood that various numbers such as first and second in this specification are used for differentiation only for ease of description, and are not used to limit the scope of the embodiments of the present invention.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of the present invention.

A person of ordinary skill in the art may be aware that, in combination with illustrative logical blocks and steps described in the embodiments disclosed in this specification may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to an actual requirement to achieve the objectives of the solutions of the embodiments.

In addition, functional units in the embodiments of the present invention may be integrated into one processing unit, or each of the units may exist alone physically, or two or more units may be integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, all or some of the procedures or functions according to the embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A network performance detection method, comprising:
determining, by a first device, identification information of a received data packet, wherein the identification information comprises a flow identifier and a block identifier, and the flow identifier comprises a source Internet Protocol, IP, address, a source port, a destination IP address, and a destination port of the data packet; and the block identifier is a higher N-bit value of an IPID field in the data packet, wherein N is a positive integer less than a total bit quantity of the IPID field;
collecting, by the first device based on data packets having same identification information, statistics on packet block information corresponding to the identification information; and
sending, by the first device, the packet block information to a second device when statistics collection of the packet block information corresponding to the identification information is completed, wherein the packet block information is used to determine packet block quality information corresponding to the identification information.

2. The method according to claim 1, wherein the packet block information comprises start time, end time, a total packet quantity, and a total byte quantity;
the start time is receiving time at which the first device receives a first data packet having the identification information;
the end time is receiving time at which the first device receives a last data packet having the identification information;
the total packet quantity is a total quantity of data packets having the identification information that are received by the first device; and
the total byte quantity is a total quantity of bytes of the data packets having the identification information that are received by the first device.

3. The method according to claim 2, wherein the collecting, by the first device based on data packets having same identification information, statistics on packet block information corresponding to the identification information comprises:
updating, by the first device, the packet block information corresponding to the identification information when the identification information of the data packet already exists; or
creating, by the first device, the packet block information corresponding to the identification information when the identification information of the data packet does not exist.

4. The method according to claim 3, wherein the creating, by the first device, the packet block information corresponding to the identification information when the identification information of the data packet does not exist comprises:
when the flow identifier of the data packet does not exist, creating, by the first device, the packet block information corresponding to the identification information, wherein the start time in the packet block information is receiving time of the data packet; or
when the flow identifier of the data packet exists, but the block identifier does not exist, creating, by the first device, the packet block information corresponding to the identification information, wherein the start time in the packet block information is receiving time of the data packet.

5. The method according to claim 3 or 4, wherein the sending, by the first device, the packet block information to a second device when statistics collection of the packet block information corresponding to the identification information is completed comprises:
when receiving a next data packet and determining that identification information of the next data packet does not exist, determining, by the first device, that the statistics collection of the packet block information corresponding to the identification information is completed; and
sending, by the first device, the packet block information to the second device.

6. A network performance detection method, comprising:
receiving, by a second device, packet block information that corresponds to each piece of identification information and that is reported by each first device, wherein the identification information comprises a flow identifier and a block identifier, and the flow identifier comprises a source Internet Protocol, IP, address, a source port, a destination IP address, and a destination port of a data packet; and the block identifier is a higher N-bit value of an IPID field in the data packet, wherein N is a positive integer less than a total bit quantity of the IPID field;
searching, by the second device, the packet block information corresponding to each piece of identification information for a plurality of pieces of packet block information having same identification information; and
determining, by the second device based on the plurality of pieces of packet block information having the same identification information, packet block quality information corresponding to each piece of identification information, wherein the packet block quality information comprises a packet loss ratio, a bit loss ratio, and a latency.

7. The method according to claim 6, wherein the packet block information comprises start time, end time, a total packet quantity, and a total byte quantity;
the start time is receiving time at which each first device receives a first data packet having the identification information;
the end time is receiving time at which each first device receives a last data packet having the identification information;
the total packet quantity is a total quantity of data packets having the identification information that are received by each first device; and
the total byte quantity is a total quantity of bytes of the data packets having the identification information that are received by each first device.

8. The method according to claim 7, wherein the determining, by the second device based on the plurality of pieces of packet block information having the same identification information, packet block quality information corresponding to each piece of identification information comprises:
for the plurality of pieces of packet block information having the same identification information, calculating, by the second device based on a difference between total packet quantities in the plurality of pieces of packet block information, a packet loss ratio between a plurality of first devices that report the plurality of pieces of packet block information; calculating a bit loss ratio between the plurality of first devices based on a difference between total byte quantities in the plurality of pieces of packet block information; and calculating a latency between the plurality of first devices based on a difference between start time or a difference between end time in the plurality of pieces of packet block information.

9. A network performance detection apparatus, wherein the network performance detection apparatus is a first device and comprises:
a determining module, configured to determine identification information of a received data packet, wherein the identification information comprises a flow identifier and a block identifier, and the flow identifier comprises a source Internet Protocol, IP, address, a source port, a destination IP address, and a destination port of the data packet; and the block identifier is a higher N-bit value of an IPID field in the data packet, wherein N is a positive integer less than a total bit quantity of the IPID field;
a statistics collection module, configured to collect, based on data packets having same identification information, statistics on packet block information corresponding to the identification information; and
a sending module, configured to send the packet block information to a second device when statistics collection of the packet block information corresponding to the identification information is completed, wherein the packet block information is used to determine packet block quality information corresponding to the identification information.

10. The apparatus according to claim 9, wherein the packet block information comprises start time, end time, a total packet quantity, and a total byte quantity;
the start time is receiving time at which a first device receives a first data packet having the identification information;
the end time is receiving time at which the first device receives the last data packet having the identification information;
the total packet quantity is a total quantity of data packets having the identification information that are received by the first device; and
the total byte quantity is a total quantity of bytes of the data packets having the identification information that are received by the first device.

11. The apparatus according to claim 10, wherein the statistics collection module is configured to:
update the packet block information corresponding to the identification information when the identification information of the data packet already exists; or
create the packet block information corresponding to the identification information when the identification information of the data packet does not exist.

12. The apparatus according to claim 11, wherein the statistics collection module is configured to:
when the flow identifier of the data packet does not exist, create the packet block information corresponding to the identification information, wherein the start time in the packet block information is receiving time of the data packet; or
when the flow identifier of the data packet exists, but the block identifier does not exist, create the packet block information corresponding to the identification information, wherein the start time in the packet block information is receiving time of the data packet.

13. The apparatus according to claim 11 or 12, wherein the sending module is configured to:
when a next data packet is received, and identification information of the next data packet does not exist, determine that the statistics collection of the packet block information corresponding to the identification information is completed; and
send the packet block information to the second device.

14. A network performance detection apparatus, comprising:
a receiving module, configured to receive packet block information that corresponds to each piece of identification information and that is reported by each first device, wherein the identification information comprises a flow identifier and a block identifier, and the flow identifier comprises a source Internet Protocol, IP, address, a source port, a destination IP address, and a destination port of a data packet; and the block identifier is a higher N-bit value of an IPID field in the data packet, wherein N is a positive integer less than a total bit quantity of the IPID field;
a search module, configured to search the packet block information corresponding to each piece of identification information for a plurality of pieces of packet block information having same identification information; and
a determining module, configured to determine, based on the plurality of pieces of packet block information having the same identification information, packet block quality information corresponding to each piece of identification information, wherein the packet block quality information comprises a packet loss ratio, a bit loss ratio, and a latency.

15. The apparatus according to claim 14, wherein the packet block information comprises start time, end time, a total packet quantity, and a total byte quantity;
the start time is receiving time at which each first device receives a first data packet having the identification information;
the end time is receiving time at which each first device receives a last data packet having the identification information;
the total packet quantity is a total quantity of data packets having the identification information that are received by each first device; and
the total byte quantity is a total quantity of bytes of the data packets having the identification information that are received by each first device.
